# EUROPEAN PATENT APPLICATION

(11) **EP 4 600 230 A1**
(43) Date of publication of application: **13.08.2025**
(21) Application number: 23864123.7
(22) Date of filing: 06.12.2023
(51) Int. Cl.: C04B 5/00, C04B 20/04, C04B 20/02, C04B 18/14

(54) **METHOD FOR REDUCING CONTENT OF HIGH-ACTIVITY CAO IN STEEL SLAG**

(30) Priority: 29.11.2023 CN 202311614627
(71) Applicant: Shanxi Taigang Stainless Steel Co., Ltd., Shanxi 030003 (CN)
(72) Inventor: LI, Jianmin, Taiyuan, Shanxi 030003 (CN); LI, Haokun, Taiyuan, Shanxi 030003 (CN); FAN, Jianjun, Taiyuan, Shanxi 030003 (CN); YI, Guilan, Taiyuan, Shanxi 030003 (CN); SHI, Yonglin, Taiyuan, Shanxi 030003 (CN); LIU, Wenwen, Taiyuan, Shanxi 030003 (CN); HE, Jia, Taiyuan, Shanxi 030003 (CN)
(74) Representative: Köllner, Malte
(86) International application number: PCT/CN2023/136844
(87) International publication number: WO 2025/112093

(57) **Abstract**

The present invention discloses a method for reducing the content of high-activity CaO in steel slag, which includes controlling the temperature of steel slag to 200~500°C and adding it into a high-pressure reactor, introducing atomized water and CO₂ gas into the high-pressure reactor, so that CaO in the steel slag reacts with the atomized water and CO₂; crushing the reacted steel slag, wherein the crushed steel slag with a particle size of 5~20mm is added into a conical barrel for negative pressure high-speed steam ventilation dehydration and then finely ground to a particle size of less than Smm; mixing the finely ground steel slag and the crushed steel slag with a particle size of less than 5mm and adding them into an Isamill, adding sintering flue gas desulfurization wastewater and introducing high-temperature steam and CO₂ gas into the Isamill for further fine grinding to obtain fine-grained steel slag. The present invention can effectively reduce the content of high-activity CaO in steel slag, which significantly improves the stability of subsequent resource reuse of steel slag.

## Description

### TECHNICAL FIELD

The present invention belongs to the technical field of comprehensive recycling of resources, and particularly relates to a method for reducing the content of high-activity CaO in steel slag.

### BACKGROUND

Steel slag is a large ore and powdery material containing CaO, SiO₂, MgO, etc., which is a by-product of the steelmaking process in iron and steel plants. In the past, steel slag was treated by landfill or being added in a small amount for fine grinding cement, but the treatment capacity was limited, and there were still a lot of steel slag that could not be treated. Therefore, steel slag was crushed and used as a road construction material or a building material after fine grinding, thereby achieving secondary utilization of steel slag, but the high-activity CaO in steel slag is likely to expand after absorbing water in the natural environment, which affected the stability of steel slag in the later stage, leading to a result that a large amount of steel slag cannot be comprehensively utilized.

Therefore, how to reduce the content of high-activity CaO in steel slag to improve the stability of subsequent resource reuse of steel slag has become an urgent technical problem in this field.

### SUMMARY

In order to solve the technical problems in the prior art, the present invention provides a method for reducing the content of high-activity CaO in steel slag, which includes the following steps:
(1) controlling the temperature of steel slag to 200~500°C, adding the steel slag into a high-pressure reactor, introducing atomized water and CO₂ gas into the high-pressure reactor, and allowing CaO in the steel slag to react with the atomized water and CO₂, wherein the atomized water is sprayed by a spray nozzle, the water quantity of the atomized water is controlled to be 0.1~0.3 times the weight of the steel slag, the pressure of the CO₂ gas is controlled to be 0.1~0.6MPa, the flow rate of CO₂ gas is controlled to be 20~60m³/hour per ton of steel slag, and the time for introducing CO₂ gas is controlled to be 2~5 hours;
(2) crushing the reacted steel slag, wherein the crushed steel slag with a particle size of greater than 20mm is returned to be crushed again; the crushed steel slag with a particle size of 5~20mm is added into a conical barrel for negative pressure high-speed steam ventilation dehydration and then finely ground to a particle size of less than 5mm, wherein the negative pressure in the conical barrel is controlled to be 0.3~0.8MPa, the airflow speed at the outlet of the lower end of the conical barrel is controlled to be 40~120m/s; mixing the finely ground steel slag and the crushed steel slag with a particle size of less than 5mm and adding them into an Isamill, adding sintering flue gas desulfurization wastewater and introducing high-temperature steam and CO₂ gas into the Isamill for further fine grinding, discharging the treated steel slag slurry from the outlet of the Isamill, and dehydrating to obtain fine-grained steel slag, wherein the flow rate of CO₂ gas is controlled at 90~130m³/hour per ton of steel slag, the time for introducing CO₂ gas is controlled at 0.2~0.8 hours, and the temperature of the steel slag slurry in the Isamill is controlled to be greater than 40°C, and the proportion of the part with a particle size of less than 0.074mm in the fine-grained steel slag is controlled to be greater than 90%.

Further, in the method for reducing the content of high-activity CaO in steel slag, the proportion of the part with a particle size of less than 3mm in the crushed steel slag is controlled to be more than 75% during crushing the reacted steel slag.

Further, in the method for reducing the content of high-activity CaO in the steel slag, the air flow speed at the outlet of the lower end of the conical barrel is controlled to be 55m/s during the negative pressure high-speed steam ventilation dehydration.

Further, in the method for reducing the content of high-activity CaO in the steel slag, the air flow speed at the outlet of the lower end of the conical barrel is controlled to be 65m/s during the negative pressure high-speed steam ventilation dehydration.

Further, in the method for reducing the content of high-activity CaO in the steel slag, the air flow speed at the outlet of the lower end of the conical barrel is controlled to be 75m/s during the negative pressure high-speed steam ventilation dehydration.

Further, in the method for reducing the content of high-activity CaO in the steel slag, the air flow speed at the outlet of the lower end of the conical barrel is controlled to be 85m/s during the negative pressure high-speed steam ventilation dehydration.

Further, in the method for reducing the content of high-activity CaO in the steel slag, the air flow speed at the outlet of the lower end of the conical barrel is controlled to be 95m/s during the negative pressure high-speed steam ventilation dehydration.

Further, in the method for reducing the content of high-activity CaO in steel slag, the negative pressure in the conical barrel is controlled to be 0.4Mpa during the negative pressure high-speed steam ventilation dehydration.

Further, in the method for reducing the content of high-activity CaO in steel slag, the negative pressure in the conical barrel is controlled to be 0.5Mpa during the negative pressure high-speed steam ventilation dehydration.

Further, in the above method for reducing the content of high-activity CaO in steel slag, the negative pressure in the conical barrel is controlled to 0.6Mpa during the negative pressure high-speed steam ventilation dehydration.

Further, in the method for reducing the content of high-activity CaO in steel slag, the steel slag includes the following components in percentage by weight: TFe=1~7%, Cao=42~57%, SiO₂=11~33%, MgO=3~9%, Al₂O₃=0.8~4.7%, Cr=0.5~4.7%, Ni=0.03~0.15%, and the steel slag is a block material with a particle size of 10~300mm.

The method for reducing the content of high-activity CaO in steel slag has the following advantages and beneficial effects:
In the method of the present invention, high-temperature steel slag is added into a high-pressure reactor, water and CO₂ gas are introduced for reaction, and then the reacted steel slag is mechanically crushed, wherein the crushed steel slag with a particle size of more than 20mm is returned to be crushed again, the crushed steel slag with a particle size of 5~20mm is added into a conical barrel for negative pressure high-speed steam ventilation dehydration and then is finely ground to a particle size of less than 5mm; the finely ground steel slag is mixed with the crushed steel slag with a particle size of less than 5mm and then added into the Isamill, water, high-temperature steam and CO₂ gas are introduced into the Isamill for further fine grinding treatment, and finally fine-grained steel slag is obtained, so that the content of high-activity CaO in steel slag is effectively reduced, and the stability of subsequent resource reuse of steel slag is significantly improved.

### BRIEF DESCRIPTION OF DRAWINGS

In order to explain the embodiments of the invention or the technical solutions in the prior art more clearly, the following will give a brief introduction to the drawings needed in the embodiments or the prior art description. It is obvious that the drawings in the following description are only some embodiments of the invention, and for those skilled in the art, they can also give other drawings based on the drawings without creative works. In the drawings:

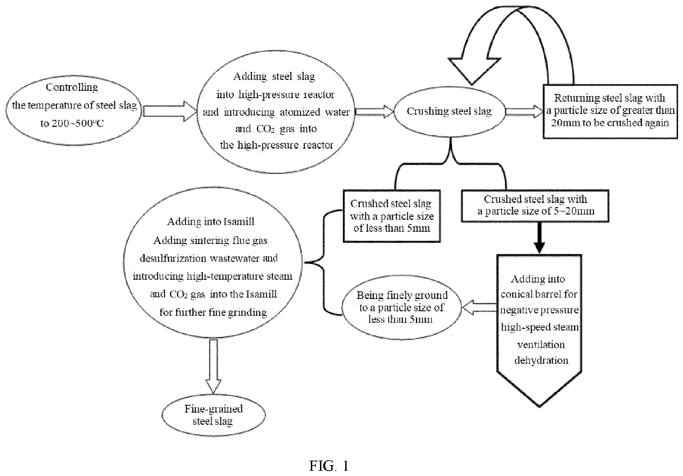

FIG. 1 is a schematic process flow diagram of the method for reducing the content of high-activity CaO in steel slag of the present invention.

### DESCRIPTION OF EMBODIMENTS

In order to make the object, technical solution and advantages of the invention clearer, the technical solution of the invention will be described completely in combination with the embodiments of the invention and the corresponding drawings. Obviously, the described embodiments are only part of the embodiments of the invention, not all of them. Based on the embodiments of the invention, all other embodiments obtained by those skilled in the art without creative works belong to the protection scope of the invention.

Generally, the method for reducing the content of high-activity CaO in steel slag of the resent invention includes the following process steps:
High-temperature steel slag is added into a high-pressure reactor, atomized water and CO₂ gas are introduced into the high-pressure reactor, so that CaO in the steel slag reacts with the atomized water and CO₂ as follows:

CaO+H₂O=Ca(OH)₂ (1)

Ca(OH)₂+CO₂=CaCO₃+H₂O (2)

Thereby, the content of high-activity CaO in steel slag can be effectively reduced;
The reacted steel slag is mechanically crushed, wherein the crushed steel slag with a particle size of more than 20mm is returned to be crushed again, the crushed steel slag with a particle size of 5~20mm is added into a conical barrel for negative pressure high-speed steam ventilation dehydration and then finely ground to a particle size of less than 5mm; after mixing the finely ground steel slag with the crushed steel slag with a particle size of less than 5mm, they are added into an Isamill, and water, high-temperature steam and CO₂ gas are introduced into the Isamill for further fine grinding to obtain fine-grained steel slag.

Specifically, as shown in FIG. 1, the method for reducing the content of high-activity CaO in steel slag of the present invention includes the following steps:
(1) controlling the temperature of steel slag to 200~500°C, adding the steel slag into a high-pressure reactor, introducing atomized water and CO₂ gas into the high-pressure reactor, thereby CaO in the steel slag reacts with the atomized water and CO₂, wherein the water quantity of the atomized water is controlled to be 0.1~0.3 times the weight of the steel slag, the pressure of the CO₂ gas is controlled to be 0.1~0.6MPa, the flow rate of CO₂ gas is controlled to be 20~60m³/hour per ton of steel slag, and the time for introducing CO₂ gas is controlled to be 2~5 hours;
(2) crushing the reacted steel slag, wherein the crushed steel slag with a particle size of greater than 20mm is returned to be crushed again; the crushed steel slag with a particle size of 5~20mm is added into a conical barrel for negative pressure high-speed steam ventilation dehydration and then finely ground to a particle size of less than 5mm, wherein the negative pressure in the conical barrel is controlled to be 0.3~0.8MPa, the airflow speed at the outlet of the lower end of the conical barrel is controlled to be 40~120m/s; mixing the finely ground steel slag and the crushed steel slag with a particle size of less than 5mm and adding them into an Isamill, adding sintering flue gas desulfurization wastewater and introducing high-temperature steam and CO₂ gas into the Isamill for further fine grinding, discharging the treated steel slag slurry from the outlet of the Isamill, and dehydrating to obtain fine-grained steel slag, wherein the flow rate of CO₂ gas is controlled at 90~130m³/hour per ton of steel slag, the time for introducing CO₂ gas is controlled at 0.2~0.8 hours, and the temperature of the steel slag slurry in the Isamill is controlled to be greater than 40°C, and the proportion of the part with a particle size of less than 0.074mm in the fine-grained steel slag is controlled to be greater than 90%.

Further, in the method for reducing the content of high-activity CaO in steel slag, the proportion of the part with a particle size of less than 3mm in the crushed steel slag is controlled to be more than 75% during crushing the reacted steel slag.

As a specific embodiment, in the method for reducing the content of high-activity CaO in the steel slag, the air flow speed at the outlet of the lower end of the conical barrel is controlled to be 55m/s during the negative pressure high-speed steam ventilation dehydration.

As a specific embodiment, in the method for reducing the content of high-activity CaO in the steel slag, the air flow speed at the outlet of the lower end of the conical barrel is controlled to be 65m/s during the negative pressure high-speed steam ventilation dehydration.

As a specific embodiment, in the method for reducing the content of high-activity CaO in the steel slag, the air flow speed at the outlet of the lower end of the conical barrel is controlled to be 75m/s during the negative pressure high-speed steam ventilation dehydration.

As a specific embodiment, in the method for reducing the content of high-activity CaO in the steel slag, the air flow speed at the outlet of the lower end of the conical barrel is controlled to be 85m/s during the negative pressure high-speed steam ventilation dehydration.

As a specific embodiment, in the method for reducing the content of high-activity CaO in the steel slag, the air flow speed at the outlet of the lower end of the conical barrel is controlled to be 95m/s during the negative pressure high-speed steam ventilation dehydration.

As a specific embodiment, in the method for reducing the content of high-activity CaO in steel slag, the negative pressure in the conical barrel is controlled to be 0.4Mpa during the negative pressure high-speed steam ventilation dehydration.

As a specific embodiment, in the method for reducing the content of high-activity CaO in steel slag, the negative pressure in the conical barrel is controlled to be 0.5Mpa during the negative pressure high-speed steam ventilation dehydration.

As a specific embodiment, in the above method for reducing the content of high-activity CaO in steel slag, the negative pressure in the conical barrel is controlled to 0.6Mpa during the negative pressure high-speed steam ventilation dehydration.

As a specific embodiment, in the method for reducing the content of high-activity CaO in steel slag, the steel slag includes the following components in percentage by weight: TFe=1~7%, Cao=42~57%, SiO₂=11~33%, MgO=3~9%, Al₂O₃=0.8~4.7%, Cr=0.5~4.7%, Ni=0.03~0.15%, and the steel slag is a block material with a particle size of 10~300mm.

The method for reducing the content of high-activity CaO in steel slag of the present invention will be described in detail in combination with the reference example in the prior art and specific examples 1~7 of the present invention.

### Reference example

The conventional method for reducing the content of high-activity CaO in steel slag in the prior art includes the following specific production steps:
(1) Preparation of raw materials: 100 tons of high-temperature steel slag was poured into a high-pressure reactor, wherein the steel slag was steel slag produced by Steel-making Plant of Taigang Company, and its components by weight percentage were: TFe=3.62%, CaO=56.12%, SiO₂=21.37%, MgO=7.87%, Al₂O₃=4.17%, Cr=2.28%, Ni=0.12%, and the steel slag was a block material with a particle size of 10~300mm, the temperature of steel slag was 310°C.
(2) Water and CO₂ were introduced into the high-pressure reactor, wherein the water amount was 15 tons, and water was sprayed from the top of the high-pressure reactor, the pressure of CO₂ gas was 0.4Mpa, the flow rate of CO₂ gas was 55m³/hour per ton of steel slag, and the reaction time of steel slag with water and CO₂ gas was 2.5 hours.
(3) Crushing: after mechanical crushing and fine grinding of steel slag, the proportion of the part with a particle size of less than 0.074mm in steel slag was 91.3%, thereby obtaining fine-grained steel slag.

According to the test, after treatment according to the conventional method of reducing the content of high-activity CaO in steel slag in the prior art, the content of high-activity CaO in steel slag is 8.3%, which is relatively high.

### Example 1

When Example 1 of the present invention is adopted to treat steel slag, high-temperature steel slag is added into a high-pressure reactor, water and CO₂ gas are introduced into the high-pressure reactor for reaction, and then the reacted steel slag is mechanically crushed, wherein the crushed steel slag with a particle size of more than 20mm is returned to be crushed again, the crushed steel slag with a particle size of 5~20mm is added into a conical barrel for negative pressure high-speed steam ventilation dehydration and then is finely ground to a particle size of less than Smm, and then the finely ground steel slag and the crushed steel slag with a particle size of less than 5mm are mixed and added into an Isamill, water, high-temperature steam and CO₂ gas are introduced into the Isamill for further fine grinding to obtain fine-grained steel slag.

The method for reducing the content of high-activity CaO in steel slag in Example 1 of the present invention includes the following specific steps:
(1) 100 tons of high-temperature steel slag was poured into a high-pressure reactor, wherein the steel slag was produced by Steel-making Plant of Taigang Company, and its components by weight percentage were: TFe=3.62%, CaO=56.12%, SiO₂=21.37%, MgO=7.87%, Al₂O₃=4.17%, Cr=2.28%, Ni=0.12%, the steel slag was a block material with particle size of 10~300mm, the temperature of the steel slag was 310°C.
(2) Water and CO₂ were introduced into the high-pressure reactor to react with the high-activity CaO in the steel slag, and the amount of water was 15 tons, wherein water was sprayed from the top of the high-pressure reactor and the water was atomized water sprayed by the nozzle; the pressure of CO₂ gas was 0.4Mpa, the flow rate of CO₂ gas was 55m³/hour per ton of steel slag, and the reaction time of steel slag with water and CO₂ gas was 2.5 hours.
(3) The reacted steel slag was crushed with mechanical equipment, the crushed steel slag with a particle size of greater than 20mm was returned to be crushed again; the crushed steel slag with a particle size of 5~20mm was added into a conical barrel for negative pressure high-speed steam ventilation dehydration and then finely ground to a particle size of less than Smm, wherein the negative pressure in the conical barrel was 0.4Mpa, the airflow speed at the outlet of the lower end of the conical barrel was 55m/s; the finely ground steel slag was mixed with the crushed steel slag with a particle size of less than Smm, and then they were added into an Isamill; sintering flue gas desulfurization wastewater was added into the Isamill, high-temperature steam and CO₂ gas were introduced into the Isamill for further fine grinding treatment, wherein the flow rate of CO₂ gas was 100m³/hour per ton of steel slag, the time for introducing CO₂ gas was 0.4 hours, the temperature of the steel slag slurry in the Isamill was 45°C, and after the steel slag stayed in the Isamill for 1.7 hours, the steel slag slurry was discharged from the outlet of the Isamill and was dehydrated to obtain fine-grained steel slag, and the proportion of the part with a particle size of less than 0.074mm in the fine-grained steel slag was 92.9%.

According to the test, the content of high-activity CaO in steel slag was 5.1% after being treated according to the method of reducing the content of high-activity CaO in the steel slag in Example 1 of the present invention.

### Example 2

On the basis of Example 1, Example 2 of the present invention improves the airflow speed at the outlet of the lower end of the conical barrel. Specifically, the method for reducing the content of high-activity CaO in steel slag in Example 2 of the present invention includes the following specific steps:
(1) 100 tons of high-temperature steel slag was poured into a high-pressure reactor, wherein the steel slag was produced by Steel-making Plant of Taigang Company, and its components by weight percentage were: TFe=3.62%, CaO=56.12%, SiO₂=21.37%, MgO=7.87%, Al₂O₃=4.17%, Cr=2.28%, Ni=0.12%, the steel slag was a block material with particle size of 10~300mm, the temperature of the steel slag was 310°C.
(2) Water and CO₂ were introduced into the high-pressure reactor to react with the high-activity CaO in the steel slag, and the amount of water was 15 tons, wherein water was sprayed from the top of the high-pressure reactor and the water was atomized water sprayed by the nozzle; the pressure of CO₂ gas was 0.4Mpa, the flow rate of CO₂ gas was 55m³/hour per ton of steel slag, and the reaction time of steel slag with water and CO₂ gas was 2.5 hours.
(3) The reacted steel slag was crushed with mechanical equipment, the crushed steel slag with a particle size of greater than 20mm was returned to be crushed again; the crushed steel slag with a particle size of 5~20mm was added into a conical barrel for negative pressure high-speed steam ventilation dehydration and then finely ground to a particle size of less than Smm, wherein the negative pressure in the conical barrel was 0.4Mpa, the airflow speed at the outlet of the lower end of the conical barrel was 65m/s; the finely ground steel slag was mixed with the crushed steel slag with a particle size of less than Smm, and then they were added into an Isamill; sintering flue gas desulfurization wastewater was added into the Isamill, high-temperature steam and CO₂ gas were introduced into the Isamill for further fine grinding treatment, wherein the flow rate of CO₂ gas was 100m³/hour per ton of steel slag, the time for introducing CO₂ gas was 0.4 hours, the temperature of the steel slag slurry in the Isamill was 45°C, and after the steel slag stayed in the Isamill for 1.7 hours, the steel slag slurry was discharged from the outlet of the Isamill and was dehydrated to obtain fine-grained steel slag, and the proportion of the part with a particle size of less than 0.074mm in the fine-grained steel slag was 93.2%.

According to the test, the content of high-activity CaO in steel slag was 4.8% after being treated according to the method of reducing the content of high-activity CaO in the steel slag in Example 2 of the present invention.

### Example 3

On the basis of Example 2, Example 3 of the present invention further improves the airflow speed at the outlet of the lower end of the conical barrel. Specifically, the method for reducing the content of high-activity CaO in steel slag in Example 3 of the present invention includes the following specific steps:
(1) 100 tons of high-temperature steel slag was poured into a high-pressure reactor, wherein the steel slag was produced by Steel-making Plant of Taigang Company, and its components by weight percentage were: TFe=3.62%, CaO=56.12%, SiO₂=21.37%, MgO=7.87%, Al₂O₃=4.17%, Cr=2.28%, Ni=0.12%, the steel slag was a block material with particle size of 10~300mm, the temperature of the steel slag was 310°C.
(2) Water and CO₂ were introduced into the high-pressure reactor to react with the high-activity CaO in the steel slag, and the amount of water was 15 tons, wherein water was sprayed from the top of the high-pressure reactor and the water was atomized water sprayed by the nozzle; the pressure of CO₂ gas was 0.4Mpa, the flow rate of CO₂ gas was 55m³/hour per ton of steel slag, and the reaction time of steel slag with water and CO₂ gas was 2.5 hours.
(3) The reacted steel slag was crushed with mechanical equipment, the crushed steel slag with a particle size of greater than 20mm was returned to be crushed again; the crushed steel slag with a particle size of 5~20mm was added into a conical barrel for negative pressure high-speed steam ventilation dehydration and then finely ground to a particle size of less than Smm, wherein the negative pressure in the conical barrel was 0.4Mpa, the airflow speed at the outlet of the lower end of the conical barrel was 75m/s; the finely ground steel slag was mixed with the crushed steel slag with a particle size of less than Smm, and then they were added into an Isamill; sintering flue gas desulfurization wastewater was added into the Isamill, high-temperature steam and CO₂ gas were introduced into the Isamill for further fine grinding treatment, wherein the flow rate of CO₂ gas was 100m³/hour per ton of steel slag, the time for introducing CO₂ gas was 0.4 hours, the temperature of the steel slag slurry in the Isamill was 45°C, and after the steel slag stayed in the Isamill for 1.7 hours, the steel slag slurry was discharged from the outlet of the Isamill and was dehydrated to obtain fine-grained steel slag, and the proportion of the part with a particle size of less than 0.074mm in the fine-grained steel slag was 92.5%.

According to the test, the content of high-activity CaO in steel slag was 4.5% after being treated according to the method of reducing the content of high-activity CaO in the steel slag in Example 3 of the present invention.

### Example 4

On the basis of Example 3, Example 4 of the present invention further improves the airflow speed at the outlet of the lower end of the conical barrel. Specifically, the method for reducing the content of high-activity CaO in steel slag in Example 4 of the present invention includes the following specific steps:
(1) 100 tons of high-temperature steel slag was poured into a high-pressure reactor, wherein the steel slag was produced by Steel-making Plant of Taigang Company, and its components by weight percentage were: TFe=3.62%, CaO=56.12%, SiO₂=21.37%, MgO=7.87%, Al₂O₃=4.17%, Cr=2.28%, Ni=0.12%, the steel slag was a block material with particle size of 10~300mm, the temperature of the steel slag was 310°C.
(2) Water and CO₂ were introduced into the high-pressure reactor to react with the high-activity CaO in the steel slag, and the amount of water was 15 tons, wherein water was sprayed from the top of the high-pressure reactor and the water was atomized water sprayed by the nozzle; the pressure of CO₂ gas was 0.4Mpa, the flow rate of CO₂ gas was 55m³/hour per ton of steel slag, and the reaction time of steel slag with water and CO₂ gas was 2.5 hours.
(3) The reacted steel slag was crushed with mechanical equipment, the crushed steel slag with a particle size of greater than 20mm was returned to be crushed again; the crushed steel slag with a particle size of 5~20mm was added into a conical barrel for negative pressure high-speed steam ventilation dehydration and then finely ground to a particle size of less than Smm, wherein the negative pressure in the conical barrel was 0.4Mpa, the airflow speed at the outlet of the lower end of the conical barrel was 85m/s; the finely ground steel slag was mixed with the crushed steel slag with a particle size of less than Smm, and then they were added into an Isamill; sintering flue gas desulfurization wastewater was added into the Isamill, high-temperature steam and CO₂ gas were introduced into the Isamill for further fine grinding treatment, wherein the flow rate of CO₂ gas was 100m³/hour per ton of steel slag, the time for introducing CO₂ gas was 0.4 hours, the temperature of the steel slag slurry in the Isamill was 45°C, and after the steel slag stayed in the Isamill for 1.7 hours, the steel slag slurry was discharged from the outlet of the Isamill and was dehydrated to obtain fine-grained steel slag, and the proportion of the part with a particle size of less than 0.074mm in the fine-grained steel slag was 93.0%.

According to the test, the content of high-activity CaO in steel slag was 4.2% after being treated according to the method of reducing the content of high-activity CaO in the steel slag in Example 4 of the present invention.

### Example 5

On the basis of Example 4, Example 5 of the present invention further improves the airflow speed at the outlet of the lower end of the conical barrel. Specifically, the method for reducing the content of high-activity CaO in steel slag in Example 5 of the present invention includes the following specific steps:
(1) 100 tons of high-temperature steel slag was poured into a high-pressure reactor, wherein the steel slag was produced by Steel-making Plant of Taigang Company, and its components by weight percentage were: TFe=3.62%, CaO=56.12%, SiO₂=21.37%, MgO=7.87%, Al₂O₃=4.17%, Cr=2.28%, Ni=0.12%, the steel slag was a block material with particle size of 10~300mm, the temperature of the steel slag was 310°C.
(2) Water and CO₂ were introduced into the high-pressure reactor to react with the high-activity CaO in the steel slag, and the amount of water was 15 tons, wherein water was sprayed from the top of the high-pressure reactor and the water was atomized water sprayed by the nozzle; the pressure of CO₂ gas was 0.4Mpa, the flow rate of CO₂ gas was 55m³/hour per ton of steel slag, and the reaction time of steel slag with water and CO₂ gas was 2.5 hours.
(3) The reacted steel slag was crushed with mechanical equipment, the crushed steel slag with a particle size of greater than 20mm was returned to be crushed again; the crushed steel slag with a particle size of 5~20mm was added into a conical barrel for negative pressure high-speed steam ventilation dehydration and then finely ground to a particle size of less than Smm, wherein the negative pressure in the conical barrel was 0.4Mpa, the airflow speed at the outlet of the lower end of the conical barrel was 95m/s; the finely ground steel slag was mixed with the crushed steel slag with a particle size of less than Smm, and then they were added into an Isamill; sintering flue gas desulfurization wastewater was added into the Isamill, high-temperature steam and CO₂ gas were introduced into the Isamill for further fine grinding treatment, wherein the flow rate of CO₂ gas was 100m³/hour per ton of steel slag, the time for introducing CO₂ gas was 0.4 hours, the temperature of the steel slag slurry in the Isamill was 45°C, and after the steel slag stayed in the Isamill for 1.7 hours, the steel slag slurry was discharged from the outlet of the Isamill and was dehydrated to obtain fine-grained steel slag, and the proportion of the part with a particle size of less than 0.074mm in the fine-grained steel slag was 92.6%.

According to the test, the content of high-activity CaO in steel slag was 4.1% after being treated according to the method of reducing the content of high-activity CaO in the steel slag in Example 5 of the present invention.

### Example 6

Example 6 of the present invention further improves the negative pressure in the conical barrel on the basis of Example 5. Specifically, the method for reducing the content of high-activity CaO in steel slag in Example 6 of the present invention includes the following specific steps:
(1) 100 tons of high-temperature steel slag was poured into a high-pressure reactor, wherein the steel slag was produced by Steel-making Plant of Taigang Company, and its components by weight percentage were: TFe=3.62%, CaO=56.12%, SiO₂=21.37%, MgO=7.87%, Al₂O₃=4.17%, Cr=2.28%, Ni=0.12%, the steel slag was a block material with particle size of 10~300mm, the temperature of the steel slag was 310°C.
(2) Water and CO₂ were introduced into the high-pressure reactor to react with the high-activity CaO in the steel slag, and the amount of water was 15 tons, wherein water was sprayed from the top of the high-pressure reactor and the water was atomized water sprayed by the nozzle; the pressure of CO₂ gas was 0.4Mpa, the flow rate of CO₂ gas was 55m³/hour per ton of steel slag, and the reaction time of steel slag with water and CO₂ gas was 2.5 hours.
(3) The reacted steel slag was crushed with mechanical equipment, the crushed steel slag with a particle size of greater than 20mm was returned to be crushed again; the crushed steel slag with a particle size of 5~20mm was added into a conical barrel for negative pressure high-speed steam ventilation dehydration and then finely ground to a particle size of less than Smm, wherein the negative pressure in the conical barrel was 0.5Mpa, the airflow speed at the outlet of the lower end of the conical barrel was 95m/s; the finely ground steel slag was mixed with the crushed steel slag with a particle size of less than Smm, and then they were added into an Isamill; sintering flue gas desulfurization wastewater was added into the Isamill, high-temperature steam and CO₂ gas were introduced into the Isamill for further fine grinding treatment, wherein the flow rate of CO₂ gas was 100m³/hour per ton of steel slag, the time for introducing CO₂ gas was 0.4 hours, the temperature of the steel slag slurry in the Isamill was 45°C, and after the steel slag stayed in the Isamill for 1.7 hours, the steel slag slurry was discharged from the outlet of the Isamill and was dehydrated to obtain fine-grained steel slag, and the proportion of the part with a particle size of less than 0.074mm in the fine-grained steel slag was 93.0%.

According to the test, the content of high-activity CaO in steel slag was 3.9% after being treated according to the method of reducing the content of high-activity CaO in the steel slag in Example 6 of the present invention.

### Example 7

Example 7 of the present invention further improves the negative pressure in the conical barrel on the basis of Example 6. Specifically, the method for reducing the content of high-activity CaO in steel slag in Example 7 of the present invention includes the following specific steps:
(1) 100 tons of high-temperature steel slag was poured into a high-pressure reactor, wherein the steel slag was produced by Steel-making Plant of Taigang Company, and its components by weight percentage were: TFe=3.62%, CaO=56.12%, SiO₂=21.37%, MgO=7.87%, Al₂O₃=4.17%, Cr=2.28%, Ni=0.12%, the steel slag was a block material with particle size of 10~300mm, the temperature of the steel slag was 310°C.
(2) Water and CO₂ were introduced into the high-pressure reactor to react with the high-activity CaO in the steel slag, and the amount of water was 15 tons, wherein water was sprayed from the top of the high-pressure reactor and the water was atomized water sprayed by the nozzle; the pressure of CO₂ gas was 0.4Mpa, the flow rate of CO₂ gas was 55m³/hour per ton of steel slag, and the reaction time of steel slag with water and CO₂ gas was 2.5 hours.
(3) The reacted steel slag was crushed with mechanical equipment, the crushed steel slag with a particle size of greater than 20mm was returned to be crushed again; the crushed steel slag with a particle size of 5~20mm was added into a conical barrel for negative pressure high-speed steam ventilation dehydration and then finely ground to a particle size of less than Smm, wherein the negative pressure in the conical barrel was 0.6Mpa, the airflow speed at the outlet of the lower end of the conical barrel was 95m/s; the finely ground steel slag was mixed with the crushed steel slag with a particle size of less than Smm, and then they were added into an Isamill; sintering flue gas desulfurization wastewater was added into the Isamill, high-temperature steam and CO₂ gas were introduced into the Isamill for further fine grinding treatment, wherein the flow rate of CO₂ gas was 100m³/hour per ton of steel slag, the time for introducing CO₂ gas was 0.4 hours, the temperature of the steel slag slurry in the Isamill was 45°C, and after the steel slag stayed in the Isamill for 1.7 hours, the steel slag slurry was discharged from the outlet of the Isamill and was dehydrated to obtain fine-grained steel slag, and the proportion of the part with a particle size of less than 0.074mm in the fine-grained steel slag was 92.8%.

According to the test, the content of high-activity CaO in steel slag was 3.8% after being treated according to the method of reducing the content of high-activity CaO in the steel slag in Example 7 of the present invention.

Comparing Examples 1~7 of the present invention with the reference example, it can be concluded that:
For example 1 of the present invention, high-temperature steel slag was added into a high-pressure reactor, water and CO₂ gas were introduced into THE high-pressure reactor to react, then the reacted steel slag was mechanically crushed, wherein the crushed steel slag with a particle size of more than 20mm was returned to be crushed again, and the crushed steel slag with a particle size of 5~20mm was added into a conical barrel for negative pressure high-speed steam ventilation dehydration and then finely ground to a particle size of less than 5mm; the finely ground steel slag was mixed with the crushed steel slag smaller than 5mm and then added into an Isamill, water, high-temperature steam and CO₂ gas were introduced into the Isamill for further fine grinding treatment, and finally fine-grained steel slag was obtained; the content of high-activity CaO in steel slag was 5.1%, which was 3.2 percentage points lower than 8.3% of the reference example, and the reduction range was relatively large.

For Example 2 of the present invention, on the basis of Example 1, the airflow speed at the outlet of the lower end of the conical barrel was increased from 55m/s to 65m/s, and the content of high-activity CaO in steel slag was 4.8%, which was 0.3 percentage points lower than that in Example 1.

For Example 3 of the present invention, on the basis of Example 2, the airflow speed at the outlet of the lower end of the conical barrel was increased from 65m/s to 75m/s, and the content of high-activity CaO in steel slag was 4.5%, which was 0.3 percentage points lower than that in Example 2.

For Example 4 of the present invention, on the basis of Example 3, the airflow speed at the outlet of the lower end of the conical barrel was increased from 75m/s to 85m/s, and the content of high-activity CaO in steel slag was 4.2%, which was 0.3 percentage points lower than that in Example 3.

For Example 5 of the present invention, on the basis of Example 4, the airflow speed at the outlet of the lower end of the conical barrel is increased from 85m/s to 95m/s, and the content of high-activity CaO in steel slag was 4.1%, which was 0.1 percentage point lower than that in Example 4.

For Example 6 of the present invention, on the basis of Example 5, the negative pressure in the conical barrel was increased from 0.4Mpa to 0.5Mpa, and the content of the high-activity CaO in steel slag was 3.9%, which was 0.2 percentage points lower than that in Example 5.

For Example 7 of the present invention, on the basis of Example 6, the negative pressure in the conical barrel was increased from 0.5Mpa to 0.6Mpa, and the content of the high-activity CaO in steel slag was 3.8%, which was 0.1 percentage point lower than that in Example 6.

To sum up, compared with the prior art, the method for reducing the content of high-activity CaO in steel slag of the present invention has the following advantages and beneficial effects:
In the method of the present invention, high-temperature steel slag is added into a high-pressure reactor, water and CO₂ gas are introduced for reaction, and then the reacted steel slag is mechanically crushed, wherein the crushed steel slag with a particle size of more than 20mm is returned to be crushed again, the crushed steel slag with a particle size of 5~20mm is added into a conical barrel for negative pressure high-speed steam ventilation dehydration and then is finely ground to a particle size of less than 5mm; the finely ground steel slag is mixed with the crushed steel slag with a particle size of less than 5mm and then added into the Isamill, water, high-temperature steam and CO₂ gas are introduced into the Isamill for further fine grinding treatment, and finally fine-grained steel slag is obtained, so that the content of high-activity CaO in steel slag is effectively reduced, and the stability of subsequent resource reuse of steel slag is significantly improved.

It should be noted that in the context of this invention, unless otherwise specified and limited, the term "connect" or its synonyms should be interpreted broadly, for example, "connect" can be a fixed connection or a detachable connection; it can be a mechanical connection or an electrical connection; it can be directly connected or indirectly connected through an intermediate medium; it can be the internal connection of two components or the interaction relationship between two components. For those skilled in the art, the specific meaning of the above terms in this utility model can be understood according to specific circumstances. In addition, the terms such as "first" and "second" are only used to distinguish one component or operation from another, and do not necessarily require or imply any such actual relationship or order between these components or operations. Moreover, the terms "include", "comprise" or any other variation thereof are intended to cover non-exclusive inclusion, so that a process, method, article or device including a series of elements includes not only those elements, but also other elements not explicitly listed, or elements inherent in such process, method, article or device.

It should also be noted that the above embodiments are only used to illustrate the technical solution of the present invention and not to limit it. Although the present invention has been described in detail with reference to the aforementioned embodiments, those skilled in the art should understand that it is still possible to modify the technical solution recorded in the aforementioned embodiments, or to equivalently replace some of the technical features therein, and these modifications or replacements do not make the essence of the corresponding technical solution deviate from the scope of the present invention.

## Claims

1. A method for reducing the content of high-activity CaO in steel slag, **characterized in that** the method includes the following steps:
(1) controlling the temperature of steel slag to 200~500°C, adding the steel slag into a high-pressure reactor, introducing atomized water and CO₂ gas into the high-pressure reactor, so that CaO in the steel slag reacts with the atomized water and CO₂, wherein the atomized water is sprayed by a spray nozzle, the water quantity of the atomized water is controlled to be 0.1~0.3 times the weight of the steel slag, the pressure of the CO₂ gas is controlled to be 0.1~0.6MPa, the flow rate of CO₂ gas is controlled to be 20~60m³/hour per ton of steel slag, and the time for introducing CO₂ gas is controlled to be 2~5h;
(2) crushing the reacted steel slag, wherein the crushed steel slag with a particle size of greater than 20mm is returned to be crushed again; the crushed steel slag with a particle size of 5~20mm is added into a conical barrel for negative pressure high-speed steam ventilation dehydration and then finely ground to a particle size of less than 5mm, wherein the negative pressure in the conical barrel is controlled to be 0.3~0.8MPa, the airflow speed at the outlet of the lower end of the conical barrel is controlled to be 40~120m/s; mixing the finely ground steel slag and the crushed steel slag with a particle size of less than 5mm and adding them into an Isamill, adding sintering flue gas desulfurization wastewater and introducing high-temperature steam and CO₂ gas into the Isamill for further fine grinding, discharging the treated steel slag slurry from the outlet of the Isamill, and dehydrating to obtain fine-grained steel slag, wherein the flow rate of CO₂ gas is controlled at 90~130m³/hour per ton of steel slag, the time for introducing CO₂ gas is controlled at 0.2~0.8 hours, the temperature of the steel slag slurry in the Isamill is controlled to be greater than 40°C, and the proportion of the part with a particle size of less than 0.074mm in the fine-grained steel slag is controlled to be greater than 90%.

2. The method for reducing the content of high-activity CaO in steel slag according to claim 1, **characterized in that** the proportion of the part with a particle size of less than 3mm in the crushed steel slag is controlled to be more than 75% during crushing the reacted steel slag.

3. The method for reducing the content of high-activity CaO in steel slag according to claim 1, **characterized in that** the air flow speed at the outlet of the lower end of the conical barrel is controlled to be 55m/s during the negative pressure high-speed steam ventilation dehydration.

4. The method for reducing the content of high-activity CaO in steel slag according to claim 1, **characterized in that** the air flow speed at the outlet of the lower end of the conical barrel is controlled to be 65m/s during the negative pressure high-speed steam ventilation dehydration.

5. The method for reducing the content of high-activity CaO in steel slag according to claim 1, **characterized in that** the air flow speed at the outlet of the lower end of the conical barrel is controlled to be 75m/s during the negative pressure high-speed steam ventilation dehydration.

6. The method for reducing the content of high-activity CaO in steel slag according to claim 1, **characterized in that** the air flow speed at the outlet of the lower end of the conical barrel is controlled to be 85m/s during the negative pressure high-speed steam ventilation dehydration.

7. The method for reducing the content of high-activity CaO in steel slag according to claim 1, **characterized in that** the air flow speed at the outlet of the lower end of the conical barrel is controlled to be 95m/s during the negative pressure high-speed steam ventilation dehydration.

8. The method for reducing the content of high-activity CaO in steel slag according to claim 1, **characterized in that** the negative pressure in the conical barrel is controlled to be 0.4Mpa during the negative pressure high-speed steam ventilation dehydration.

9. The method for reducing the content of high-activity CaO in steel slag according to claim 1, **characterized in that** the negative pressure in the conical barrel is controlled to be 0.5Mpa during the negative pressure high-speed steam ventilation dehydration.

10. The method for reducing the content of high-activity CaO in steel slag according to claim 1, **characterized in that** the negative pressure in the conical barrel is controlled to 0.6Mpa during the negative pressure high-speed steam ventilation dehydration.

11. The method for reducing the content of high-activity CaO in steel slag according to any one of claims 1 to 10, **characterized in that** the steel slag includes the following components in percentage by weight: TFe=1~7%, Cao=42~57%, SiO₂=11~33%, MgO=3~9%, Al₂O₃=0.8~4.7%, Cr=0.5~4.7%, Ni=0.03~0.15%, and the steel slag is a block material with a particle size of 10~300mm.
